# EUROPÄISCHE PATENTSCHRIFT

(11) **EP 2 950 115 B1**
(45) Veröffentlichungstag und Bekanntmachung des Hinweises auf die Patenterteilung: **28.12.2016**
(21) Anmeldenummer: 15163302.1
(22) Anmeldetag: 13.04.2015
(51) Int. Cl.: G01S 7/481, G01S 7/00, G01S 17/42, F21V 8/00, G01S 7/497

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(30) Priorität: 26.05.2014 DE 102014107353
(43) Veröffentlichungstag der Anmeldung: 02.12.2015
(73) Patentinhaber: SICK AG, 79183 Waldkirch (DE)
(72) Erfinder: Jägel, Matthias, 79104 Freiburg (DE); Schmalfuß, Moritz, 79254 Oberried (DE); Schmitz, Dr. Stephan, 79108 Freiburg (DE); Kerp, Michael, 79183 Waldkirch (DE); Szerbakowski, Boris, 79183 Waldkirch (DE); Kufner, Martin, 79215 Elzach (DE)
(74) Vertreter: Hehl, Ulrich

(56) Entgegenhaltungen:
- EP-A1- 1 411 371
- WO-A1-2005/101092
- DE-A1- 19 927 502
- DE-A1-102004 014 041
- DE-A1-102007 003 023
- FR-A1- 2 985 300

## Beschreibung

Die Erfindung betrifft einen optoelektronischen Sensor und ein Verfahren zur Erfassung von Objekten nach dem Oberbegriff von Anspruch 1 beziehungsweise 7.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Antastungen desselben Objekts an verschieden Stellen dessen Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Drehspiegel trifft. Lichtsender, Lichtempfänger sowie zugehörige Elektronik und Optik sind im Gerät fest montiert und vollziehen die Drehbewegung nicht mit. Durch den Spiegel ergeben sich sehr hohe Anforderungen an die Ausrichtung der Lichtsender und Lichtempfänger zur Drehachse. Abweichungen davon führen zu einer verbogenen Überwachungsebene. Außerdem sind solche Optikeinheiten baugroß, weil sich immer ein Teil der Objektweite über den Spiegel bis zur Empfangsoptik in das Gerät erstreckt. Streulichteffekte an der Frontscheibe durch die Frontscheibe selbst oder deren Verunreinigung führen zu einer Beeinträchtigung der Sensorfunktion.

Es ist auch bekannt, den Drehspiegel durch eine mitbewegte Abtasteinheit zu ersetzten. Beispielsweise rotiert in der DE 197 57 849 B4 der gesamte Messkopf mit Lichtsender und Lichtempfänger. Die EP 2 388 619 A1 sieht ebenfalls eine drehbare Sende-/Empfangseinheit vor. Diese Abtasteinheit wird beispielsweise nach dem Transformationsprinzip von den drehfesten Bereichen des Sensors mit Energie versorgt, während die Datenübertragung drahtlos per Funk oder auf optischem Wege erfolgt. Näher ausgeführt sind diese drahtlosen Schnittstellen dann aber nicht.

In der EP 2 645 125 A1 sind in der drehenden Ablenkeinheit Lichtleiter vorgesehen, die das Licht von einem stationären Lichtsender beziehungsweise zu einem stationären Lichtempfänger umlenken. Das ist keine optische Datenübertragung, da direkt das Lichtsignal der Messung übertragen wird.

Die US 7,187,823 B2 beschreibt ein System zur Übertragung von Leistung und einem optischen Signal zwischen Komponenten eines Überwachungsgeräts. Dabei rotieren zwei Ringkerne zueinander, während die optische Übertragung durch Öffnungen in deren Zentrum erfolgt. Dieses System erfordert einen besonderen Antrieb mit Hohlwelle.

Aus der DE 199 27 502 A1 ist ein Laserscanner bekannt, bei dem eine Laserdiode und eine Photodiode in einem feststehenden Fuß angeordnet sind, während als Sende- und Empfangsoptik eine Kugel mit Linseneigenschaften und spiegelnden Flächen rotiert. Das Licht wird mittels Lichtleitern von der Laserdiode in die Kugel und umgekehrt aus der Kugel zu der Photodiode geführt.

Die EP 1 411 371 A1 offenbart eine Überwachungs- und Positionsmessvorrichtung, in der über Vorder- und Rückseite eines Drehspiegels sowohl ein bildgebendes als auch ein scannendes System integriert ist. Dabei sind Lichtleiter vorgesehen, um Sendelicht auf die Rückseite beziehungsweise Empfangslicht von der Rückseite des Drehspiegels in den unteren Teil der Vorrichtung zu lenken.

Aus der DE 10 2004 014 041 A1 ist ein Sensorsystem zur Hinderniserkennung bekannt, in dem ein Sensorkopf rotiert. Sendeseitig ist in dem Sensorkopf eine Laserzeile vorgesehen. Empfangsseitig wird das Licht über einen Strahlteiler geführt und so einerseits mit einer Empfängerzeile die Lichtlaufzeit bestimmt und andererseits mit einem CMOS-Sensor ein Bild erzeugt. Die Datenübertragung in den und aus dem Sensorkopf erfolgt über optische Sende- und Empfangsgruppen.

In der DE 10 2007 003 023 A1 wird die Frontscheibe eines optoelektronischen Sensors auf Lichtdurchlässigkeit getestet. Dazu wird von einer Kante her Licht in die Frontscheibe eingekoppelt und per Totalreflexion zur gegenüberliegenden Kante geleitet. Ist die Frontscheibe verschmutzt oder beschädigt, so geht Licht verloren, wodurch derartige Störungen erkannt werden können.

Daher ist Aufgabe der Erfindung, einen optoelektronischen Sensor mit verbesserter optischer Datenkommunikation zwischen ruhendem und rotierendem Teil anzugeben.

Diese Aufgabe wird durch einen optoelektronischen Sensor und ein Verfahren zur Erfassung von Objekten nach Anspruch 1 beziehungsweise 7 gelöst. Der Sensor, insbesondere ein Laserscanner, weist eine bewegliche Abtasteinheit und eine Sockeleinheit mit jeweils einer optischen Datenübertragungseinheit auf. Die Erfindung geht nun von dem Grundgedanken aus, zum Datenaustausch einen Lichtleiter zu verwenden, der an einer umlaufenden Frontscheibe des Sensors angeordnet ist. Eine solche Frontscheibe ist zum Schutz des Sensors üblich und umlaufend ausgebildet, d. h. ein Panoramafenster mit einem Winkelbereich bis zu 360° für den rotierenden Abtaststrahl. Über den Lichtleiter ist eine unidirektionale oder bidirektionale Kommunikation möglich.

Dabei fungiert die Frontscheibe selbst als Lichtleiter. Das optische Signal wird durch innere Totalreflexion in der Frontscheibe weitergeleitet. Auf ein separates Bauteil als Lichtleiter kann so verzichtet werden. Vorzugsweise sind Strukturierungen oder Beschichtungen der Frontscheibe vorgesehen, um das optische Signal auf einem vorgegebenen Lichtweg zu halten.

Die Erfindung hat den Vorteil, dass die als Lichtleiter fungierende Frontscheibe einen deutlichen Abstand zu der rotierenden Abtasteinheit schafft. Es gibt deshalb eine klare räumliche Trennung ohne eine gegenseitige mechanische oder optische Störung zwischen dem eigentlichen Messsystem und der Datenübertragung zwischen Abtasteinheit und Sockeleinheit. Ein besonderer Antrieb für die Bewegung der Abtasteinheit, etwa mit Hohlwelle oder dergleichen, ist dabei nicht erforderlich.

Die Frontscheibe bildet vorzugsweise eine Haube, und die Kopplung des optischen Signals erfolgt in einem Zentrum der Haube. Die Abtasteinheit und die Sockeleinheit sind gewöhnlich auf der Drehachse der Abtasteinheit übereinander angeordnet, und die Haube dient als beispielsweise kuppelartiger Abschluss. Nach dieser Ausführungsform wird nun das optische Signal von der Abtasteinheit zunächst in die Gegenrichtung der Sockeleinheit, nämlich zur Haube hin ausgesandt und dann erst in der Haube zur Sockeleinheit umgelenkt. Dabei gehört die Haube insofern zur Sockeleinheit, als sie ebenfalls die Bewegung der Abtasteinheit nicht mitvollzieht, jedoch befindet sich die Auswertungselektronik der Sockeleinheit üblicherweise nicht in der Haube. In Ausführungsformen mit einem separaten Lichtleiter kann anstelle einer Frontscheibe als Haube auch ein nicht transparentes Gehäuseteil die Frontscheibe kuppelförmig abschließen, da hier die lichtleitenden Eigenschaften der Frontscheibe nicht benötigt werden.

Die Auswertungseinheit ist bevorzugt dafür ausgebildet, anhand des optischen Signals einen Verschmutzungsgrad der Frontscheibe zu bewerten. Die Verschmutzung der Frontscheibe ist ein regelmäßig auftretendes Problem von optoelektronischen Sensoren, und in vielen herkömmlichen Laserscannern sind eigene Messeinheiten zum Überprüfen der Lichtdurchlässigkeit vorgesehen. Wenn das optische Signal durch innere Totalreflexion in der Frontscheibe übertragen wird, wird an Verunreinigungsstellen der Frontscheibe Licht geschluckt oder kann austreten. Deshalb bietet das tatsächlich in der Sockeleinheit ankommende optische Signal die Möglichkeit, die Verschmutzung der Frontscheibe zu bewerten. Es wird damit eine zusätzliche wichtige Information gewonnen, ohne dass dafür weitere Bauteile benötigt werden.

Die Bewertung bezieht bevorzugt eine Fehlerrate der Übertragung ein. Das Kommunikationsprotokoll der optischen Datenübertragung bietet ohnehin meist Möglichkeiten, die Qualität der Übertragung zu bewerten, etwa eine Bitfehlerrate. Diese Ausführungsform macht sich eine solche Bewertung zunutze, um ohne gesonderte eigene Auswertung die Verschmutzung der Frontscheibe bewerten zu können. Es ist aber ebenso denkbar, das optische Signal anders und insbesondere unabhängig von den darin codierten Informationen zu bewerten, beispielsweise anhand einer Signalamplitude.

Die erste Datenübertragungseinheit und die zweite Datenübertragungseinheit sind bevorzugt für ein Wellenlängenmultiplexing ausgebildet. Damit können Daten in beide Richtungen übertragen werden, ohne sich gegenseitig zu stören, und es wird eine bidirektionale Kommunikation mit Vollduplex möglich.

Die Datenübertragungseinheiten tauschen bevorzugt optische Signale mit anderer Wellenlänge aus als diejenige des Sendelichtstrahls. Durch den Lichtwellenleiter und die räumliche Abtrennung der optischen Datenkommunikation durch Anordnung an der Frontscheibe ist das Problem des optischen Übersprechens schon sehr weitgehend reduziert. Durch unterschiedliche Wellenlängen kann aber die gegenseitige Beeinflussung durch Streulicht noch wirkungsvoller unterdrückt werden.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung durch einen Laserscanner;
- Fig. 2: eine schematische Schnittdarstellung durch ein Beispiel eines Laserscanners.

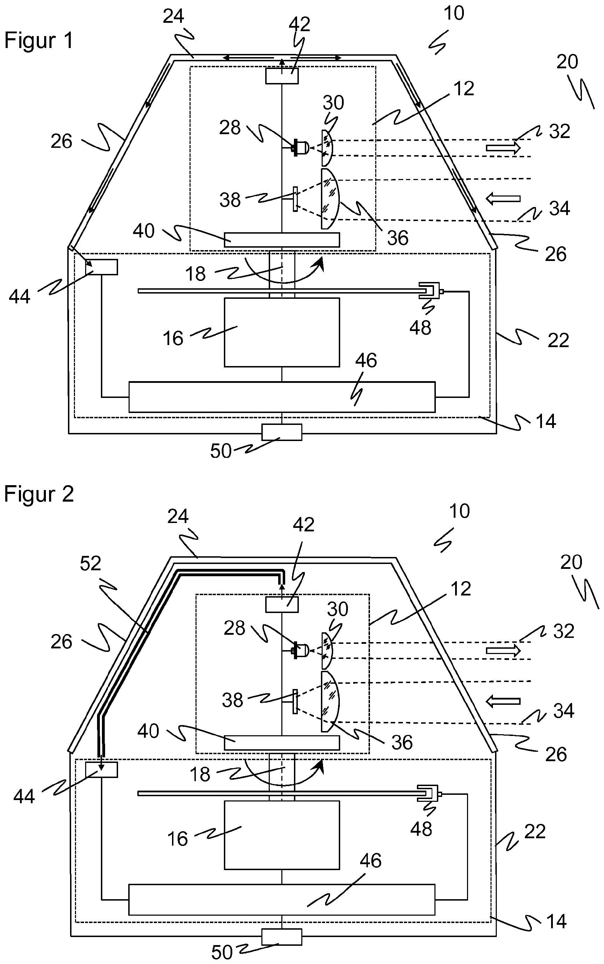

Fig. 1 zeigt eine schematische Schnittdarstellung durch einen optoelektronischen Sensor in einer Ausführungsform als Laserscanner 10. Der Laserscanner 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten. Der Laserscanner 10 ist in einem Gehäuse 22 untergebracht, welches nach oben hin eine Haube 24 mit einer um die Drehachse 18 umlaufenden Frontscheibe 26 abgeschlossen ist. Gehäuse 22 und Haube 24 könnten anders als dargestellt auch als Teil der Sockeleinheit 14 aufgefasst werden, da sie wie die Sockeleinheit 14 ruhen.

In der Abtasteinheit 12 erzeugt ein Lichtsender 28 mit Hilfe einer Sendeoptik 30 einen Sendelichtstrahl 32, der in den Überwachungsbereich 20 ausgesandt wird. Trifft der Sendelichtstrahl 32 in dem Überwachungsbereich 20 auf ein Objekt, so kehrt ein entsprechender Lichtstrahl als remittiertes Licht 34 zu dem Laserscanner 10 zurück. Das remittierte Licht 34 wird von einer Empfangsoptik 36 auf einen Lichtempfänger 38 geführt und dort in ein elektrisches Empfangssignal gewandelt. Das Empfangssignal wird an eine Vorverarbeitungseinheit 40 übergeben und dort beispielsweise verstärkt, gefiltert, digitalisiert und dergleichen. Die Vorverarbeitungseinheit 40 kann auch andere Funktionen wie die Ansteuerung des Lichtsenders 28 übernehmen oder in anderen Ausführungsformen nicht vorhanden sein.

Die Anordnung innerhalb der Abtasteinheit 12 ist ohnehin rein beispielhaft zu verstehen. So wäre alternativ jede andere an sich von einstrahligen optoelektronischen Sensoren oder Laserscannern bekannte Anordnung wie etwa eine Doppellinse mit Sendeoptik im Zentrum einer Empfangslinse oder die Verwendung eines Strahlteilerspiegels möglich.

Die Erfindung befasst sich weniger mit der konkreten Ausgestaltung der Abtasteinheit 12, sondern vielmehr mit einer noch zu erläuternden optischen Datenübertragung zwischen Abtasteinheit 12 und Sockeleinheit 14. Dazu tauscht eine erste optische Datenübertragungseinheit 42 der Abtasteinheit 12 optische Signale mit einer zweiten optischen Datenübertragungseinheit 44 der Sockeleinheit 14 aus. Über diesen Kommunikationskanal stehen die Vorverarbeitungseinheit 40 oder, falls diese nicht vorhanden ist, unmittelbar Lichtsender 28 und/oder Lichtempfänger 38 mit einer Auswertungseinheit 46 der Sockeleinheit 14 in Verbindung. Dabei kann die Steuer- und Auswertungsfunktionalität weitgehend frei zwischen Vorverarbeitungseinheit 40 und Auswertungseinheit 46 verteilt sein, wird aber so beschrieben, als sei allein die Auswertungseinheit 46 dafür zuständig.

Die Auswertungseinheit 46 wertet das Empfangssignal aus, steuert den Antrieb 16 und erhält das Signal einer Winkelmesseinheit 48, welche die jeweilige Winkelstellung der Abtasteinheit 12 bestimmt. Zur Auswertung wird vorzugsweise mit einem Lichtlaufzeitverfahren die Distanz zu einem angetasteten Objekt gemessen. Dazu wird in einem phasenbasierten System das Sendelicht des Lichtsenders 28 moduliert und eine Phasenbeziehung zu dem Empfangssignal des Lichtempfängers 38 ausgewertet. Alternativ werden in einem pulsbasierten System kurze Lichtpulse zu einem Sendezeitpunkt als Sendelicht ausgesandt und aus dem Empfangssignal deren Empfangszeitpunkt ermittelt. Dabei sind sowohl Einzelpulsverfahren, die jeweils aus einem einzigen Sendepuls eine Entfernung bestimmen, als auch Pulsmittelungsverfahren denkbar, in denen das Empfangssignal nach einer Vielzahl aufeinanderfolgender Sendepulse gesammelt und statistisch ausgewertet wird. Die jeweilige Winkelstellung, unter welcher der Sendelichtstrahl 32 jeweils ausgesandt wurde, ist von der Winkelmesseinheit 48 ebenfalls bekannt. Somit stehen nach jeder Scanperiode, also Umdrehung der Abtasteinheit 12, über den Winkel und die Entfernung zweidimensionale Polarkoordinaten aller Objektpunkte in einer Abtastebene zur Verfügung.

Damit sind die Objektpositionen beziehungsweise Objektkonturen bekannt und können über eine Sensorschnittstelle 50 ausgegeben werden. Die Sensorschnittstelle 50 oder ein weiterer, nicht gezeigter Anschluss dienen umgekehrt als Parametrierschnittstelle. Bei Anwendungen in der Sicherheitstechnik werden Schutzfelder, die in dem Überwachungsbereich 20 konfiguriert werden können, auf unzulässige Eingriffe überwacht, und daraufhin wird gegebenenfalls ein sicherheitsgerichtetes Abschaltsignal über die dann sicher ausgebildete Schnittstelle 50 (z.B. OSSD, Output Signal Switching Device) ausgegeben.

Der Lichtsender 28 kann als einfache Lichtquelle, etwa in Form einer Halbleiterdiode, aber auch als beispielsweise zeilen- oder matrixförmige Anordnung zahlreiche Lichtquellen aufgebaut sein. Entsprechend kann es sich bei dem Lichtempfänger 38 um eine einfache Empfangsfläche, etwa einer Photodiode, oder um eine beispielsweise zeilen- oder matrixförmige Anordnung von Lichtempfangselementen handeln, wie einen CCD- oder CMOS-Chip. Damit entsteht dann nicht nur ein einzelner Abtaststrahl, sondern eine entsprechende Vielzahl zur Aufnahme von zweidimensionalen Bilddaten oder dreidimensionalen Bilddaten mit Hilfe eines Lichtlaufzeitverfahrens. Prinzipiell können nahezu beliebige Sensoreinheiten in der Abtasteinheit 12 rotieren und so den Überwachungsbereich 20 erfassen, beispielsweise auch mehrere Sensoreinheiten in unterschiedlichen Winkelstellungen, die einander mit gleichen oder unterschiedlichen physikalischen Messprinzipien ergänzen. Es besteht auch die Möglichkeit, die Abtasteinheit 12 zusätzlich zu verkippen oder mehrere übereinander angeordnete Lichtsender 28 beziehungsweise Lichtempfänger 38 oder eine insbesondere entfernungsmessende Kamerazeile rotieren zu lassen, um einen dreidimensionalen Raumbereich abzutasten.

Zur Kommunikation zwischen Abtasteinheit 12 und Sockeleinheit 14 wird ein optisches Signal über die optischen Datenübertragungseinheiten 42, 44 ausgetauscht. Die wichtigere Richtung dieser Kommunikation ist meist von der Abtasteinheit 12 zur Sockeleinheit 14, da ohne das Empfangssignal oder eine aus dem Empfangssignal gewonnene Information keine Messinformation ausgegeben werden kann. Oft ist aber auch eine bidirektionale Kommunikation nützlich, etwa um den Lichtsender 28 anzusteuern oder sich mit der Vorverarbeitungseinheit 40 zu verbinden. Auch die Möglichkeit einer unidirektionalen Kommunikation von der Sockeleinheit 14 zur Abtasteinheit 12 soll nicht grundsätzlich ausgeschlossen werden. Je nachdem sind in den optischen Datenübertragungseinheiten 42, 44 jeweils ein nicht gesondert dargestellter Lichtsender, Lichtempfänger oder beides vorgesehen.

In der Ausführungsform gemäß Figur 1 wird das optische Signal von der ersten Datenübertragungseinheit 42 in die Haube 24 eingekoppelt und propagiert dann mit innerer Totalreflexion innerhalb der Haube 24 beziehungsweise der Frontscheibe 26 wie in einem Lichtleiter. Dementsprechend kann das optische Signal an beliebiger Stelle der Haube 24 beziehungsweise der Frontscheibe 26 von der zweiten Datenübertragungseinheit 44 ausgekoppelt werden, im Beispiel der Figur 1 unten an einer Auflagefläche, wo die Haube 24 auf dem übrigen Gehäuse 22 aufliegt. Das optische Signal ist damit einerseits geführt, statt frei innerhalb des Laserscanners 10 abgestrahlt zu werden und damit Streulicht zu verursachen, und andererseits wird kein zusätzliches Bauteil benötigt, sondern die Haube 24 beziehungsweise Frontscheibe 26 in einer zusätzlichen Funktion ausgenutzt.

Das durch die Frontscheibe 26 geleitete optische Signal kann zusätzlich noch dazu genutzt werden, deren Verschmutzungsgrad und damit ausreichende Transparenz für Sendelichtstrahl 32 und remittiertes Licht 34 zu bewerten. Denn eine Verschmutzung dämpft auch das optische Signal, sei es durch beeinträchtigte Lichtleitungseigenschaften oder durch Störstellen, an denen statt innerer Totalreflexion Licht austreten und damit verloren gehen kann. Diese Dämpfung kann direkt anhand der Signalamplitude oder indirekt durch Beeinträchtigung der Datenkommunikation erkannt werden, etwa Zunahme einer Bitfehlerrate.

Um eine bidirektionale Kommunikation zu ermöglichen, ist entweder ein Zeitmultiplexing mit Zeitfenstern für die eine und andere Datenrichtung oder ein Vollduplex-Datenlink beispielsweise durch Wellenlängenmultiplexing vorstellbar. Alternativ kann ein weiterer Datenkanal unabhängig von den optischen Datenübertragungseinheiten 42, 44 geschaffen werden. Obwohl durch die lichtleitenden Eigenschaften der Frontscheibe 26 Streulicht weitgehend vermieden werden kann, sollte vorzugsweise für den messenden Sendelichtstrahl 32 und das optische Signal der Datenübertragungseinheiten 42, 44 eine unterschiedliche Wellenlänge gewählt werden, möglichweise noch zusätzlich mit entsprechenden bandbegrenzenden optischen Filtern.

Figur 2 zeigt eine weitere Ausführungsform eines Laserscanners 10 in einer schematischen Schnittdarstellung. Aufbau, Eigenschaften und Ausgestaltungsmöglichkeiten entsprechen weitgehend der Ausführungsform nach Figur 1 und werden nicht erneut beschrieben.

Im Unterschied zu Figur 1 wird nicht die Frontscheibe 26 als Lichtleiter für die optische Datenkommunikation genutzt, sondern ein separater Lichtleiter 52 oder Lichtleiterstab an der Frontscheibe 26 angeordnet beziehungsweise in die Haube 24 integriert. Die erste optische Datenübertragungseinheit 42 der Abtasteinheit 12 und das obere Ende des Lichtleiters 52 befinden sich vorzugsweise mittig auf der Drehachse 18, so dass ihre gegenseitige Anordnung von der Rotation der Abtasteinheit 12 unabhängig bleibt. Die Position der zweiten optische Datenübertragungseinheit 44 in der Sockeleinheit 14 ist kaum festgelegt, da der Lichtleiter 52 nicht rotiert und das optische Signal praktisch an jede Position der Sockeleinheit 14 führen könnte. In Figur 2 ist die zweite optische Datenübertragungseinheit 44 beispielhaft an einer Randposition untergebracht.

Der Lichtleiter 52 kann beispielsweise aus Plexiglas beziehungsweise als Spritzteil hergestellt werden. Wahlweise ist der Lichtleiter 52 in die Haube 24 integriert, dort eingeklebt oder eingeclipst. Ein dünner Lichtleiter 52 beeinträchtigt die Lichtwege von Sendelichtstrahl 32 und remittiertem Licht 34 kaum und schlägt sich nur in einer geringen Dämpfung nieder. Es ist aber auch denkbar, den Lichtleiter 52 in einer Totzone des Laserscanners 10 unterzubringen, also einem Winkelbereich, in dem ohnehin nicht gescannt wird und beispielsweise ein Referenzziel für einen internen Funktionstest untergebracht ist, hinter dem der Lichtleiter 52 dann vorteilhafterweise verläuft. Da im Beispiel nach Figur 2 keine innere Totalreflexion ausgenutzt wird, kann die Haube 24 im Bereich außerhalb der Frontscheibe 24 auch aus undurchsichtigem Gehäusematerial aufgebaut sein. Weiterhin ist mit dem gleichen Grundaufbau auch eine elektrische statt optische Datenübertragung möglich, in welcher der Lichtleiter 52 durch einen elektrischen Leiter ersetzt ist. Die Anbindung oben an der Haube 24 zwischen drehender Abtasteinheit 12 und ruhender Sockeleinheit 14 erfolgt dann beispielsweise induktiv oder kapazitiv.

## Patentansprüche

1. Optoelektronischer Sensor (10) zur Erfassung von Objekten in einem Überwachungsbereich (20), insbesondere Laserscanner, mit einem Lichtsender (28) zum Aussenden eines Sendelichtstrahls (32), einem Lichtempfänger (38) zum Erzeugen eines Empfangssignals aus dem von Objekten in dem Überwachungsbereich (20) remittierten Licht (34), einer Sockeleinheit (14) mit einer umlaufenden Frontscheibe (26), einer gegenüber der Sockeleinheit (14) beweglichen Abtasteinheit (12) zur periodischen Abtastung des Überwachungsbereichs (20) sowie einer Auswertungseinheit (46) zur Erfassung von Informationen über Objekte in dem Überwachungsbereich (20) anhand des Empfangssignals, wobei Lichtsender (28) und Lichtempfänger (38) in der Abtasteinheit (12) angeordnet sind und die Abtasteinheit (12) eine erste optische Datenübertragungseinheit (42) und die Sockeleinheit (14) eine zweite optische Datenübertragungseinheit (44) aufweist, um zur Kommunikation zwischen Sockeleinheit (12) und Abtasteinheit (14) Daten über ein optisches Signal auszutauschen,
**dadurch gekennzeichnet,**
**dass** die Datenübertragungseinheiten (42, 44) zum Datenaustausch über einen Lichtleiter (26) ausgebildet sind und dass die Frontscheibe (26) selbst als Lichtleiter fungiert.

2. Sensor (10) nach Anspruch 1,
wobei die Frontscheibe (26) eine Haube (24) bildet und die Kopplung des optischen Signals in einem Zentrum der Haube (24) erfolgt.

3. Sensor (10) nach Anspruch 1 oder 2,
wobei die Auswertungseinheit (46) dafür ausgebildet ist, anhand des optischen Signals einen Verschmutzungsgrad der Frontscheibe (26) zu bewerten.

4. Sensor (10) nach Anspruch 3,
wobei die Bewertung eine Fehlerrate der Übertragung einbezieht.

5. Sensor (10) nach einem der vorhergehenden Ansprüche,
wobei die erste Datenübertragungseinheit (42) und die zweite Datenübertragungseinheit (44) für ein Wellenlängenmultiplexing ausgebildet sind.

6. Sensor (10) nach einem der vorhergehenden Ansprüche,
wobei die Datenübertragungseinheiten (42, 44) optische Signale mit anderer Wellenlänge austauschen als diejenige des Sendelichtstrahls (32).

7. Verfahren zur Erfassung von Objekten in einem Überwachungsbereich (20), bei dem von einem Lichtsender (28) in einer gegenüber einer Sockeleinheit (14) verdrehbaren Abtasteinheit (12) ein Sendelichtstrahl (32) ausgesandt und von einem in der Abtasteinheit (12) angeordneten Lichtempfänger (38) empfangen wird und ein aus dem von Objekten in dem Überwachungsbereich (20) remittierten Licht (34) erzeugtes Empfangssignal zur Erfassung von Informationen über Objekte in dem Überwachungsbereich (20) ausgewertet wird, wobei zur Kommunikation zwischen Abtasteinheit (12) und Sockeleinheit (14) zwischen einer ersten optischen Datenübertragungseinheit (42) der Abtasteinheit (12) und einer zweiten optischen Datenübertragungseinheit (44) der Sockeleinheit (14) Daten über ein optisches Signal ausgetauscht werden,
**dadurch gekennzeichnet,**
**dass** die Daten über einen Lichtleiter (26) ausgetauscht werden und dass eine Frontscheibe (26) selbst als Lichtleiter fungiert.

8. Verfahren nach Anspruch 7,
wobei anhand des optischen Signals ein Verschmutzungsgrad der Frontscheibe (26) bewertet wird.

## Claims

1. An optoelectronic sensor (10) for detecting of objects in a monitoring area (20), in particular a laser scanner, comprising a light transmitter (28) for transmitting a transmission light beam (32), a light receiver (38) for generating a reception signal from the light (34) remitted by objects in the monitoring area (20), a base unit (14) having a circumferential front screen (26), a scanning unit (12) movable with respect to the base unit (14) for periodically scanning the monitoring area (20) as well as an evaluation unit (46) for obtaining information about objects in the monitoring area (20) from the reception signal, wherein light transmitter (28) and light receiver (38) are arranged in the scanning unit (12) and the scanning unit (12) comprises a first optical data transmission unit (42) and the base unit (14) comprises a second optical data transmission unit (44) for exchanging data via an optical signal for communication between base unit (14) and scanning unit (12),
**characterized in that** the data transmission units (42, 44) are configured for data exchange via a light guide (26) and **in that** the front screen (26) itself is used as the light guide.

2. The sensor (10) according to claim 1,
wherein the front screen (26) forms a cover (24) and the coupling of the optical signal takes place in a center of the cover (24).

3. The sensor (10) according to claim 1 or 2,
wherein the evaluation unit (46) is configured to evaluate a degree of contamination of the front screen (26) based on the optical signal.

4. The sensor (10) according to claim 3,
wherein the evaluation includes an error rate of the transmission.

5. The sensor (10) according to any of the preceding claims,
wherein the first data transmission unit (42) and the second data transmission unit (44) is configured for wavelength division multiplexing.

6. The sensor (10) according to any of the preceding claims,
wherein the data transmission units (42, 44) exchange optical signals with a wavelength different than that of the transmission light beam (32).

7. A method for detecting objects in a monitoring area (20),
wherein a transmission light beam (32) is transmitted by a light transmitter (28) in a scanning unit (12) rotatable relative to a base unit (14) and received by a light receiver (38) arranged in the scanning unit (12) and a reception signal generated from light (34) remitted by objects in the monitoring area (20) is evaluated for obtaining information about objects in the monitoring area (20), wherein for communication between scanning unit (12) and base unit (14) data is exchanged via an optical signal between a first optical data transmission unit (42) of the scanning unit (12) and a second optical data transmission unit (44) of the base unit (14),
**characterized in that** data is exchanged via a light guide (26) and **in that** a front screen (26) itself is used as the light guide.

8. The method according to claim 7,
wherein a degree of contamination of the front screen (26) is evaluated based on the optical signal.

## Revendications

1. Détecteur optoélectronique (10) destiné à détecter des objets dans une zone à surveiller (20), en particulier scanneur à laser, qui comprend un émetteur de lumière (12) pour émettre un rayon lumineux émis (32), un récepteur de lumière (38) pour générer un signal de réception à partir de la lumière (34) réémise par des objets dans une zone à surveiller (20), une unité formant socle (14) pourvue d'une vitre frontale périphérique (26), une unité de balayage (12) mobile par rapport à l'unité formant socle (14) et destinée à balayer périodiquement la zone à surveiller (20), ainsi qu'une unité d'évaluation (46) destinée à saisir des informations sur des objets dans la zone à surveiller (20) à la base du signal de réception,
dans lequel
l'émetteur de lumière (28) et le récepteur de lumière (38) sont agencés dans l'unité de balayage (12) et l'unité de balayage (12) comprend une première unité optique de transmission de données (42) et l'unité formant socle (14) comprend une seconde unité optique de transmission de données (44), afin d'échanger des données via un signal optique en vue de la communication entre l'unité formant socle (12) et l'unité de balayage (14),
**caractérisé en ce que**
les unités de transmission de données (42, 44) sont réalisées pour l'échange de données via un guide de lumière (26) et **en ce que** la vitre frontale (26) fait elle-même office de guide de lumière.

2. Détecteur (10) selon la revendication 1,
dans lequel la vitre frontale (26) forme un capot (24) et le couplage du signal optique a lieu dans un centre du capot (24).

3. Détecteur (10) selon la revendication 1 ou 2,
dans lequel l'unité d'évaluation (46) est réalisée pour évaluer un degré d'encrassement de la vitre frontale (26) en se basant sur le signal optique.

4. Détecteur (10) selon la revendication 3,
dans lequel l'évaluation prend en compte un taux d'erreur de la transmission.

5. Détecteur (10) selon l'une des revendications précédentes,
dans lequel la première unité de transmission de données (42) et la seconde unité de transmission de données (44) sont réalisées pour un multiplexage de longueur d'onde.

6. Détecteur (10) selon l'une des revendications précédentes,
dans lequel les unités de transmission de données (42, 44) échangent des signaux optiques avec une longueur d'onde autre que celle du rayon lumineux émis (32).

7. Procédé de détection d'objets dans une zone à surveiller (20), dans lequel un rayon lumineux (32) est émis par un émetteur de lumière (28) dans une unité de balayage (12) susceptible d'être tournée par rapport à une unité formant socle (14), et il est reçu par un récepteur de lumière (38) agencé dans l'unité de balayage (12), et un signal de réception généré de la lumière (34) réémise par des objets dans la zone à surveiller (20) est évalué pour saisir des informations sur des objets dans la zone à surveiller (20), et pour la communication entre l'unité de balayage (12) et l'unité formant socle (14), des données sont échangées via un signal optique entre une première unité optique de transmission de données (42) de l'unité de balayage (12) et une seconde unité optique (44) de transmission de données de l'unité formant socle (14),
**caractérisé en ce que**
les données sont échangées via un guide de lumière (26) et **en ce qu'**une vitre frontale (26) fait elle-même office de guide de lumière.

8. Procédé selon la revendication 7,
dans lequel un degré d'encrassement de la vitre frontale (26) est évalué en se basant sur le signal optique.
